# EUROPEAN PATENT APPLICATION

(11) **EP 4 283 029 A1**
(43) Date of publication of application: **29.11.2023**
(21) Application number: 22177964.8
(22) Date of filing: 08.06.2022
(51) Int. Cl.: D03D 9/00, D03D 1/00, D03D 15/41, D03D 15/283, D03D 15/533, B32B 13/14, D06N 7/00, B01D 71/00, E04B 1/62

(54) **TEXTILE REINFORCEMENT STRUCTURE, WATER-BASED WATERPROOFING MEMBRANE, WATERPROOFING SYSTEM AND USES THEREOF**

(30) Priority: 25.05.2022 PT 2022117997
(71) Applicant: Saint-Gobain Portugal SA, 3800-055 Aveiro (PT); Têxteis Penedo S.A., 4835-132 Guimarães (PT); CITEVE - Centro Tecnológico das Indústrias Têxtil e do Vestuário de Portugal, 4760-034 Vila Nova de Famalicão (PT); ITECONS - Instituto de Inv. e Desenv. Tecn. Para a Construção, Energia, Ambiente e Sustentabilidade, 3030-289 Coimbra (PT); CENTITVC - Centro de Nanotecnologia e Materiais Tecnicos, Funcionais e Inteligentes, 4760-034 Vila Nova de Famalicão (PT)
(72) Inventor: CARDOSO DA SILVA, LUIS MIGUEL, 3810-332 AVEIRO (PT); DA SILVA SEQUEIRA, PEDRO MIGUEL, 4450-358 MATOSINHOS (PT); RIBEIRO DE SOUSA FERREIRA, PEDRO MIGUEL, 4520-605 SÃO JOÃO DE VER (PT); DO ROSÁRIO DA SILVA ROLEIRA MARINHO, MARIA AUGUSTA, 4760-034 VILA NOVA DE FAMALICÃO (PT); MARTINS COSTA, LUANI, 4760-034 VILA NOVA DE FAMALICÃO (PT); DE ALMEIDA MORGADO, JOSÉ, 4760-034 VILA NOVA DE FAMALICÃO (PT); RODRIGUES, FILIPE MIGUEL, 4760-034 VILA NOVA DE FAMALICÃO (PT); COUTOS DOS SANTOS VENTURA, SANDRA GABRIELA, 4835-132 GUIMARÃES (PT); DIAS AFONSO, AGOSTINHO ANTÓNIO, 4835-132 GUIMARÃES (PT); SILVA ABREU, JOÃO, 4835-132 GUIMARÃES (PT); VIEIRA SIMÕES, NUNO ALBINO, 3030-504 COIMBRA (PT); VIEIRA SIMÕES, MARIA INÊS, 3150-230 CONDEIXA-A-VELHA (PT); CARDOSO FERREIRA, CÉSAR JOSÉ, 4760-034 VILA NOVA DE FAMALICÃO (PT); SILVA REMÉDIOS FURTADO, CRISTINA ALEXANDRA, 4760-034 VILA NOVA DE FAMALICÃO (PT); DE ARAÚJO SÁ, ISAQUE JOAQUIM, 4760-034 VILA NOVA DE FAMALICÃO (PT); NETO RIBEIRO, JOÃO PEDRO, 4760-034 VILA NOVA DE FAMALICÃO (PT); FERNANDES SALGADO, JOSÉ ALBERTO, 4760-034 VILA NOVA DE FAMALICÃO (PT); DA SILVA MIDÃO, MARTA SOFIA, 4760-034 VILA NOVA DE FAMALICÃO (PT); GONÇALVES DA ROCHA, MIGUEL ÂNGELO, 4760-034 VILA NOVA DE FAMALICÃO (PT)
(74) Representative: Patentree

(57) **Abstract**

The present disclosure relates to a textile reinforcement structure for waterproofing systems and a water-based waterproofing membrane for application on roofs and other surfaces. The textile reinforcement structure may also comprise coupled moisture and temperature sensing and active heating systems to accelerate the cure process and regulate the moisture during the life cycle. The water-based waterproofing membrane comprises radiation reflection enhancer additive, improving the thermal reflectance capacity and the sustainability and thermal comfort in buildings. Furthermore, the present invention also relates to a waterproofing system comprising such textile reinforcement structure and a water-proofing membrane, preferably the water-based waterproofing membrane of the present disclosure.

## Description

### TECHNICAL FIELD

The present disclosure relates to a textile reinforcement structure for waterproofing systems and a water-based waterproofing membrane for application on roofs and other surfaces. The textile reinforcement structure may also comprise coupled moisture and temperature sensing and active heating systems to accelerate the cure process and regulate the moisture during the life cycle. The water-based waterproofing membrane comprises radiation reflection enhancer additive, improving the thermal reflectance capacity and the sustainability and thermal comfort in buildings. Furthermore, the present invention also relates to a waterproofing system comprising such textile reinforcement structure and a water-proofing membrane, preferably the water-based waterproofing membrane of the present disclosure.

### BACKGROUND

Currently, an interesting solution on the market for roofs waterproofing are waterproofing membranes, i.e., liquid polymeric membranes- polyurethane resins - based on organic solvent or bi-components.

Waterproofing membranes can be solvent-base waterproofing membranes or water-based waterproofing membranes.

Water-based waterproofing membranes, also known as film-forming aqueous polyurethane and acrylic dispersions, comprises an aqueous solvent, preferably water, and polyurethane (PUR).

Solvent-based waterproofing membranes, also known as solvent-based polyurethane coatings, comprises an organic solvent incorporating polyurethane (PUR).

The solvent-based waterproofing membranes described in the prior art presents satisfactory technical performance. However, during application, additional safety conditions are required, mainly due to VOCs emissions (Volatile Organic Compounds) and the potential presence of isocyanates that are quite harmful to the applicator's health. There are other disadvantages related to fire behaviour. Since its durability may be conditioned by some atmospheric conditions and mechanical stress, its use in roofs is limited, since it is imperative to ensure watertightness.

Typical market references for waterproofing membranes: Solvent-based PUR membrane (Saint-Gobain): Weberdry PUR seal; Solvent-based PUR membrane (Sika): Sika lastic 614; Mapei PURTOP easy, Solvent-based PU membrane; Aquatex roof plus (Mapei), acrylic membrane in water dispersion for roofing, without mentioning tests according to EAD 030350-00-0402.

The existing waterproofing membranes on the market are usually reinforced by a textile structure, providing a waterproofing system, wherein the most common textiles used are non-woven polypropylene (PP) or polyester (PES).

Examples of waterproofing systems found in prior art are solvent-based PUR membrane reinforced with non-woven PES (weberdry PUR seal) and solvent-based PUR membrane reinforced with non-woven PES (Sika lastic 614), which present low resistance to tear actions and tend to tear quite easily.

Others market references for waterproofing systems comprising solvent-based membranes and textile reinforcement structures are: Geo textile non-woven fabric for liquid waterproofing systems (Polites TNT); Geo textile non-woven fabric PP for liquid waterproofing systems (Jaeger); Geo textile non-woven fabric PES for liquid waterproofing systems (Jaeger); Glass fibber mesh, coated with acrylic resin (SG Adfors).

The existing solutions of textile reinforcement structures present losses of mechanical and chemical resistances that results in its cracking damage and lower durability during its life cycle.

The pattern draft woven structures can be critical to the drying process and final mechanical performance. In the case of non-woven fabric, widely used in the prior art as textile reinforcement structures, e.g., geo textile non-woven fabric in PP and PES from Jaeger, its closed structure difficulties the drying process of the waterproofing membrane, as it absorbs the material and makes it very difficult for water to evaporate and does not allow a combined composite between the materials, resulting in a layered system. In addition, these non-woven fabrics present low tear resistance.

At the same time, woven fabric structures with a very open pattern and density also do not respond to the balance between mechanical reinforcement and ease of drying and transfer of the waterproofing membrane through the fabric.

The examples described in prior art, for instance the glass fiber mesh coated with acrylic resin of SG Adfors, also usually applied as textile reinforcement structure, presents an open structure, leading to inadequate mechanical strength to reinforce and improve the mechanical properties of the waterproofing membrane. Moreover, both non-woven fabrics and glass fiber mesh show considerable loss of tear strength when exposed to the highly alkaline environment.

Such observations demonstrate the lack of qualified and suitable solutions for waterproofing of roofs and other surfaces and support the need of the development of differentiated and qualified solutions, namely textile reinforcement structures, waterproofing membranes and waterproofing systems.

Furthermore, there is no mention in the prior art to products or solutions presenting the integration of different concepts, functionalities and technologies proposed in the present disclosure.

These facts are described to illustrate the technical problem solved by the achievements of the present disclosure

### GENERAL DESCRIPTION

The present disclosure aims to overcome the disadvantages described above in the state of the art with the development of a textile reinforcement structure for waterproofing systems and a water-based waterproofing membrane for application on roofs and other surfaces. The textile reinforcement structure may also comprise coupled moisture and temperature sensing and active heating systems to accelerate the cure process and regulate the moisture during the life cycle. The water-based waterproofing membrane comprises radiation reflection enhancer additive, improving the thermal reflectance capacity and the sustainability and thermal comfort in buildings. Furthermore, the present invention also relates to a waterproofing system comprising such textile reinforcement structure and a waterproofing membrane, preferably the water-based waterproofing membrane of the present disclosure.

Within the scope of the present disclosure, waterproofing membranes are compositions based on film-forming polyurethane dispersions generally used in the technical field of waterproofing construction materials, for instance in roofing and balcony systems. Waterproofing membranes can be solvent-base waterproofing membranes or water-based waterproofing membranes.

Within the scope of the present disclosure, water-based waterproofing membranes, also known as film-forming aqueous polyurethane dispersions, relates to a polymeric paste formulation composed by an aqueous solvent, preferably water, a polyester-polyurethane resin with film formation temperature of 0°C, 850% elongation and tensile strength of 15MPa, between 40 to 70%, fillers, talc, biocide and fungicide, polyurethane based rheological agents between 0.01 and 0.10%, pigments between 3 and 10%, pH regulator and coalescent agents.

Within the scope of the present disclosure, solvent-based waterproofing membrane, also known as solvent-based polyurethane coatings, comprises an organic solvent incorporating polyurethane (PUR).

Within the scope of the present disclosure, mesh draft pattern represents the warp and weft yarn intersection in order to achieve a textile structure with a substantially quadrangular mesh shape design.

Within the scope of the present disclosure, tack or tacking refers to the fact that the material still gives some adhesion when touched with the fingers, being a sign that film formation and drying is still incomplete.

In an embodiment, the textile reinforcement structure described in the present disclosure is useful for mechanical reinforcement of the waterproofing membranes and can be applied extensively in waterproofing systems for roofs and other surfaces.

In an embodiment, the present disclosure relates to a totally innovative and differentiated product in relation to the state of the art of the existing waterproofing systems in the construction industry for traditional and inverted roofs, and other surfaces e.g., facades, disclosing an advanced waterproofing system, comprising a water-based waterproofing membrane with radiation-reflective properties, reinforced with an intelligent textile substrate coupled with moisture and temperature sensors and active heating.

The present disclosure solves the following problems identified in the prior art:
- Losses of mechanical and chemical resistances that results in cracking damage and lower durability during the life cycle of the typical of existing solutions for roofs waterproofing reinforced solvent and water-based membrane;
- Inexistence textile reinforcement structures for water-based waterproofing membranes that results in losses of mechanical and chemical resistances that results in cracking damage and lower durability during the life cycle. The existing textile reinforcement structures on the market (non-woven) hinders the drying process of the membrane, as it absorbs the material and delays the water evaporation and does not allow a combined composite between the materials, resulting in a layered system. The very open mesh draft pattern and density of the fibre glass mesh structure described in the prior art allows the membrane transfer, resulting in a more homogeneous composite than in the case of non-woven fabrics, however it does not present sufficient mechanical strength to reinforce and improve the mechanical properties of the membrane, leading its cracking;
- The existing textile reinforcement structures on the market (e.g., non-woven fabrics and glass fibre mesh) show considerable loss of tear strength when exposed to the highly alkaline environment promoted by the water-based waterproofing membrane;
- Safety conditions to the applicator's health mainly due to lower VOCs emissions (Volatile Organic Compounds) of the water-based waterproofing membranes in comparison to the solvent-based waterproofing membranes;
- Inadequate water-based waterproofing membrane with high TSR (reflectance) to improve the sustainability and thermal comfort in buildings;
- Inexistence of a method to control or improve the membrane cure.

An aspect of the present solution relates to a waterproofing system comprising active heating means to accelerate the curing process of the waterproofing membrane, that is critical in adverse climate conditions, namely at low temperatures and/or high air moisture. The waterproofing system comprising active heating means of the present disclosure are capable of monitoring and regulate the moisture (by increasing the temperature and thus promoting evaporation) in the interior of the membrane during the curing process and also during the life cycle of the waterproofing system, in order to accelerate the cure process and/or to prevent its large damages and facilitate the maintenance.

In an embodiment, the present disclosure relates to a textile reinforcement structure for waterproofing systems comprising a woven fabric structure; a mesh draft pattern ranging from 0.1 to 3 mm; and a bidirectional tear resistance ranging from 200-500 N, measured through measured through standard EN ISO 13937-4:2000.

In an embodiment, the textile reinforcement structure for waterproofing systems comprises a mesh draft pattern ranging from 0.1-2.5 mm; more preferably 1.0-2.0 mm.

In another embodiment, the textile reinforcement structure for waterproofing systems comprises a bidirectional tear resistance ranging from 250-450 N; more preferably 300-400 N, measured through measured through standard EN ISO 13937-4:2000.

In an embodiment, the textile reinforcement structure for waterproofing systems comprises a textile reinforcement structure grammage ranging from 60 to 300 g/m²; preferably 90-200g/ m²; more preferably from 147 to 163 g/m².

In an embodiment, the textile reinforcement structure for waterproofing systems comprises a textile reinforcement structure thickness ranging from 0.3 to 1.8 mm; preferably from 0.8 to 1.3 mm.

In an embodiment, the textile reinforcement structure for waterproofing systems comprises a textile material selected from the list consisting of: polyester, polypropylene, basalt, aramid, hemp and sisal, or combinations thereof; preferably polyester.

In an embodiment, the textile reinforcement structure for waterproofing systems comprises recycled textile material.

In an embodiment, the textile reinforcement structure for waterproofing systems comprises filament yarns comprising a linear mass ranging from 167x2 to 167x4 dtex.

In an embodiment, the textile reinforcement structure for waterproofing systems comprises filament yarns comprising a twist ranging from 200-700 turns/meter, preferably 200-400 turns/meter, preferably used in the direction of the warp.

In an embodiment, textile reinforcement structure for waterproofing systems comprises a warp comprising 14-30 yarns/cm, and a weft comprising 14-30 yarns/cm; preferably, a warp comprising 16-27 yarns/cm and a weft comprising 16-27 yarns/cm; more preferably, a warp comprising 18-23 yarns/cm and a weft comprising 18-23 yarns/cm.

In an embodiment, the textile reinforcement structure for waterproofing systems comprises a woven fabric structure comprising:
a mesh draft pattern of 1.5 mm; measured with a square;
a grammage of 155 g/m²; measured according to the standard ISO 3801:1977;
a thickness of 0.8 mm; measured according with standard ISO 5084: 1996;
a bidirectional tear resistance of 300 N, measured through the standard EN ISO 13937-4: 2000;
filament yarns of 100% recycled polyester (PES) with a linear mass of 167x2 dtex and a twist of 300 turns/meter used in the direction of the warp;
a warp with 19 yarns/cm and a weft with 23 yarns/cm.

In an embodiment, the textile reinforcement structure for waterproofing systems comprises moisture sensor; temperature sensor; or combinations thereof.

In an embodiment, the textile reinforcement structure for waterproofing systems comprises control/regulation means.

In an embodiment, the textile reinforcement structure for waterproofing systems comprises means for control heating to accelerate the cure process and regulate the moisture during the life cycle of the textile reinforcement structure.

In an embodiment, the textile reinforcement structure for waterproofing systems comprises means for control heating comprising conductive wires, preferably wherein the conductive wires are integrated by weaving in the textile reinforcement structure.

In an embodiment, the conductive wires spacing ranges from 0.5 to 4 cm.

In an embodiment, the conductive wires are copper wires.

In an embodiment, the sensors are textile sensors; preferably integrated by weaving in the textile reinforcement structure.

In an embodiment, the sensors are screen printed sensors; preferably integrated directly by lamination into the textile reinforcement structure.

In another embodiment, the present disclosure relates to a water-based waterproofing membrane comprising:
a water-based dispersion of polyester-polyurethane resin, in a concentration ranging from 40-70% w/w;
one or more radiation reflection enhancer additive in a concentration ranging from 3-10% w/w;
a polyurethane rheological agent in a concentration ranging from 0.01 to 0.10% w/w, an alkaline pH regulator between 0.01 and 0.1% w/w, usually amine based, to stabilize the dispersion,
wherein the membrane forms a film at a temperature above 5°C inclusive, elongation at break of 500%, tensile strength of 8 MPa, tear strength of 27N/mm (both measured by ASTM D412-06 and AST D412-00), and a viscosity ranging from 50000 to 100000 mPa.s.

The viscosity may be measured by different methods known in the art, in the present disclosure the membrane viscosity was measured through a Brookfield RV2+ with spindle 6 at 5 rpm, in a beaker with a diameter of 8 cm and a volume of 500ml, at a temperature of 22°C.

In an embodiment, the water-based waterproofing further comprises talc, antifoam agent, biocide agent, fungicide agent and a pH regulator agent, or mixtures thereof.

In an embodiment, the radiation reflection enhancer additive is selected from a list consisting of: pigment grade titanium dioxide, chromium iron oxide, zinc iron chromite brown spinel, chromium green-black hematite, or mixtures thereof.

In an embodiment, the water-based waterproofing membrane presents a drying time of equal or less than 2 hours at a temperature of 22 °C and up to 8 hours at a temperature of 5 °C with a relative humidity up to 80%, evaluated through weight loss during time and tack effect (is considered dried when less than 10% weight loss is achieved and no tack effect on both sides of the membrane).

In another embodiment, the present disclosure relates to a waterproofing system comprising the textile reinforcement structure herein described and one or more layers of a waterproofing membrane; preferably two layers.

In an embodiment, the waterproofing system comprising the textile reinforcement structure herein described and one or more layers of a waterproofing membrane, has a final thickness ranging around 2 to 3 mm, preferably around 2 mm.

In an embodiment, the waterproofing system comprises two layers of a waterproofing membrane, wherein each layer comprises a thickness ranging from 0.75 to 1 mm.

In an embodiment, the waterproofing system) comprises a resistance of 120 N, measured according to EN ISO 13937-4: 2000.

In an embodiment, the textile reinforcement structure, after application of the waterproofing membrane, comprises a resistance loss below 20%, preferably below 10%, measured according to EN ISO 13937-4: 2000.

In an embodiment, the waterproofing system further comprises a plurality of layers of different materials.

In an embodiment, the waterproofing system may further comprise an insulation board, a first base layer cementitious mortar, a reinforcement mesh, a second base layer cementitious mortar, a first waterproofing membrane layer, said textile reinforcement structure and a second waterproofing membrane layer, wherein:
the insulation board has a thickness ranging from 40 to 150 mm;
the first base layer cementitious mortar has a thickness of 3 mm;
the reinforcement mesh has a weight of 160 g/m²;
the second base layer cementitious mortar has a thickness of 3 mm;
the first waterproofing membrane layer has a thickness ranging from 0.75 to 1 mm and is applied in the proportion of 2 kg of waterproofing membrane per m² of the textile reinforcement structure;
the textile reinforcement structure has a thickness ranging from 0.3 to 2 mm;
the second waterproofing membrane layer has a thickness ranging from 0.75 to 1 mm and is applied in the proportion of 2 kg of waterproofing membrane per m² of the textile reinforcement structure.

In an embodiment, the waterproofing system comprises the water-based waterproofing membrane disclosed in the present invention; or a solvent-based waterproofing membrane; or a water-based waterproofing membrane.

Throughout the description and claims the word "comprise" and variations of the word are not intended to exclude other technical features, such as other components, or steps. Additional objects, advantages and disclosure features will become evident to technical experts after description examination or can be learned through the practice of dissemination. The following examples and figures are provided as illustrations and are no intended to be limitative for the presented disclosure. Furthermore, the present disclosure covers all possible combinations of particular or preferred embodiments described in this document.

### BRIEF DESCRIPTION OF THE DRAWINGS

For an easier understanding, the following figures provide preferred embodiments for illustrating the disclosure and should not be seen as limiting the scope of the invention.

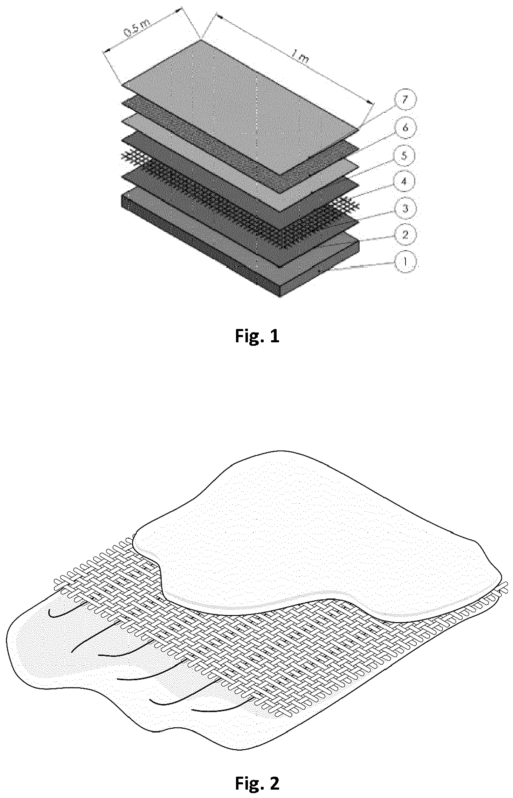

**Figure 1****:** Schematic representation of a realization of the waterproofing system.
**Figure 2****:** Schematic representation of an embodiment of the waterproofing system comprising a textile reinforcement structure with integration of heating wires and sensor wires, and the application of the waterproofing membrane.

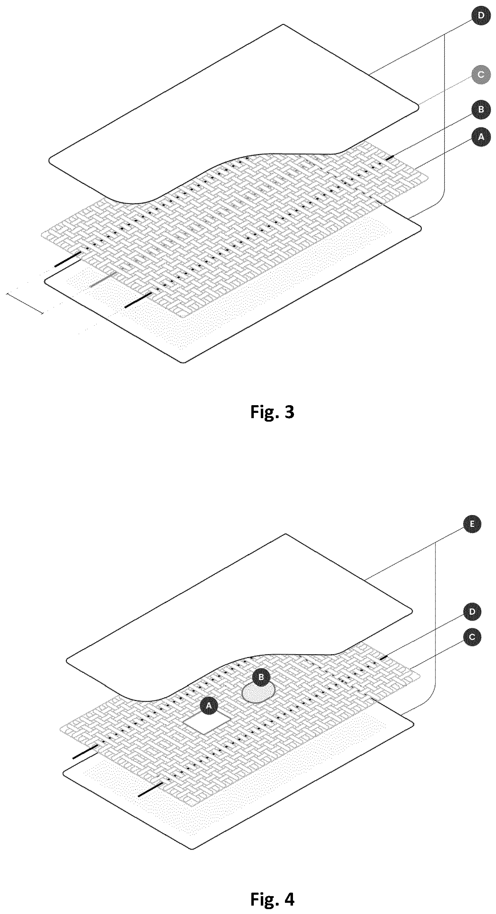

**Figure 3****:** Schematic representation of an embodiment of the waterproofing system comprising a textile reinforcement structure with the integration of heating wires and moisture and temperature textile sensors. **A:** Reinforcement textile structure; **B:** Heating Wire + Textile Temperature Sensor; **C:** Textile Moisture Sensor; **D:** Waterproofing and Thermal Reflective Water-based Membrane.
**Figure 4****:** Schematic representation of an embodiment of the waterproofing system that comprises a textile reinforcement structure with the integration of heating wires and moisture and temperature screen printed sensors. **A:** Screen-printed Moisture Sensor; **B:** Screen-printed Temperature Sensor; **C:** Reinforcement textile Structure; **D:** Heating Wire; **E:** Waterproofing and Thermal Reflective Water-based Membrane.

### DETAILED DESCRIPTION

The present disclosure relates to a textile reinforcement structure for waterproofing systems and a water-based waterproofing membrane for application on roofs and other surfaces. The textile reinforcement structure may also comprise coupled moisture and temperature sensing and active heating systems to accelerate the cure process and regulate the moisture during the life cycle. The water-based waterproofing membrane comprises radiation reflection enhancer additive, improving the thermal reflectance capacity and the sustainability and thermal comfort in buildings. Furthermore, the present invention also relates to a waterproofing system comprising such textile reinforcement structure and a water-proofing membrane, preferably the water-based waterproofing membrane of the present disclosure.

In an embodiment, the textile reinforcement structure of the present disclosure comprises technical requirements as grammage, thickness, mechanical and chemical resistance, and low hydrophilicity. Such technical requirements are justified by the need for a lightweight and flexible textile reinforcement structure that is thick enough to comply with the standard minimum thickness for reinforced waterproofing membranes (2mm), with bidirectional resistance to improve the mechanical properties of membrane and maintain sufficient strength after loss of resistance caused by the alkaline environment (pH 12-14) promoted by the membrane after application and during the life cycle. Also, using yarns made with low hydrophilicity materials in balance with a specific pattern draft to enhance the fast-drying process of the membrane, which happens through the evaporation of water.

In an embodiment, the textile reinforcement structure of the present disclosure may comprise: several continuous filament yarns of woven fabric structure of polyester, recycled polyester, polypropylene, recycled polypropylene, basalt, aramid, hemp and sisal, or combinations thereof. In terms of the texture, the pattern draft and density, warp and weft yarns create a woven fabric structure with a small (0.1-2,5mm) mesh draft pattern, which allows the optimal transfer of the membrane through the structure, promoting its adhesion with the textile structure, and fulfilling the requirements of low grammage (100-300g/m²) and thickness (0.8-1.4 mm) with high bidirectional tear resistance (250-500N).

In a preferred embodiment, the textile reinforcement structure of the present disclosure may comprise continuous filament yarns of polyester, recycled polyester, polypropylene, recycled polypropylene, basalt, aramid, hemp and sisal, or combinations thereof, with a linear mass of 167x2-167x4 dtex and a twist of 200-700 turns/meter used in the direction of the warp (14-24 yarns/cm) and weft (17-27 yarns/cm) of a woven fabric structure. In terms of the texture, the pattern draft and density of the woven fabric structure warp and weft yarns were defined, in order to develop the woven fabric structure with a small (0.5-2.5mm) mesh draft pattern, which allows the optimal transfer of the waterproofing membrane, through the structure, promoting its adhesion with the textile structure, and fulfilling the requirements of low grammage (155 ±5% g/m²) and thickness (0.8 ±0.5 mm) with high bidirectional tear resistance (250N-350N).

In a preferred embodiment, the textile reinforcement structure of the present disclosure may comprise: continuous 100% recycled polyester (PES) composition filament yarns with a linear mass of 167x2 dtex and a twist of 300 turns/meter used in the direction of the warp (19 yarns/cm) and weft (23 yarns/cm) of a woven fabric structure. In terms of the texture, the pattern draft and density of the woven fabric structure warp and weft yarns were defined, to develop the woven fabric structure with a small (1.5mm) mesh draft pattern, which allows the optimal transfer of the waterproofing membrane, through the textile structure, promoting its adhesion with the textile structure, and fulfilling the requirements of low grammage (155g/m²) and thickness (0.8 mm) with high bidirectional tear resistance (300N).

In a preferred embodiment, the textile reinforcement structure after application of the water-based waterproofing membrane presented tear resistance of 120N according to the EN ISO 13937-4.:2000.

In a preferred embodiment, the textile reinforcement structure after application of the water-based waterproofing membrane presented good breaking strength according to the ISO 13934-1.:2000, i.e., a resistance loss below 20%, preferably below 10%.

In an embodiment, the present disclosure intends to respond to the cracking problems of waterproofing systems, consisting in a combination of a waterproofing membrane and a textile reinforcement material, not minimized by the lack of mechanical strength of the textile reinforcement materials described in the prior art.

In an embodiment, the present disclosure also intends to respond to the inappropriate curing problems of the water-based waterproofing membranes, resulting from the technical characteristics of the reinforcement substrates and the variable climatic conditions, which can difficult the internal drying of the said membrane (with long curing times, especially in winter), thereby compromising the existing system durability.

In an embodiment, the present disclosure also aims to reduce the negative impacts caused on the environment and on the membrane applicator by using less toxic materials, such as water-based waterproofing membranes, improve the thermal performance of buildings by improving compatibility, mechanical and physical, with insulating panels, and also to facilitate the regulation of system internal moisture during its life cycle, with active monitoring and heating through the integration of sensors and wires in the textile reinforcement structure.

In an embodiment, the present disclosure relates to a high performance water-based waterproofing membrane, wherein such membrane is a polymeric membrane (water-based polymeric dispersion) that presents a drying time of less than 2 hours at a temperature of 22°C and up to 8 hours at temperatures of 5°C with relative moisture up to 80%, after application, in order to achieve an equal or superior performance in terms of drying and mechanical resistance compared to typical values of solvent-based waterproofing membranes, recognized as effective by the market, additionally more sustainable and much less polluting and, certainly, with a performance level of drying and resistance superior to the currently available water-based solutions.

In an embodiment, to measure the drying time of the water-based waterproofing membrane herein disclosed, two layers of 2mm of the water-based waterproofing membrane was applied in a textile reinforcement structure, corresponding to 4 Kg of the water-based waterproofing membrane per m² of textile reinforcement structure, and the drying time was controlled with a chronometer. The water-based waterproofing membrane is considered dry when it is verified that weight loss is lower than 10% in 8h and no tack is notice in both sides of the membrane. Regarding the textile reinforcement structure used, it comprises continuous 100% recycled polyester (PES) composition filament yarns with a linear mass of 167x2 dtex and a twist of 300 turns/meter used in the direction of the warp (19 yarns/cm) and weft (23 yarns/cm) of a woven fabric structure. In terms of the texture, the pattern draft and density of the woven fabric structure warp and weft yarns were defined, to develop the woven fabric structure with a small (1.5mm) mesh draft pattern, which allows the optimal transfer of the waterproofing membrane, through the textile structure, promoting its adhesion with the textile structure, and fulfilling the requirements of low grammage (155g/m²) and thickness (0.8 mm) with high bidirectional tear resistance (300N),

In an embodiment, the water-based waterproofing membrane of the present disclosure surprisingly shows a drying time of equal or less than 2 hours at a temperature of 22 °C and up to 8 hours at a temperature of 5 °C with a relative humidity up to 80%, evaluated through weight loss during time and tack effect (is considered dried when less than 10% weight loss is achieved , preferably less than 5% weight loss, and no tack effect on both sides of the membrane)ln an embodiment, the drying process and time of the membrane was evaluated at 5°C + 80% RH (relative humidity) by the following parameters:
- 1) Tack evaluation by touch with less than 8 hours in both sides of the membrane;
- 2) Weight loss of 2mm film formed during:
   t (time) = 8h: < 10%
   t= 12h :< 5%
   t= 24h: < 5%
   Film is considered stable when weight loss is lower than 5%.

In an embodiment, the drying process and time of the membrane was evaluated 22°C + 55% RH by the following parameters:
- 1) Tack evaluation by touch with less than 2hours in both sides of the membrane;
- 2) Weight loss of 2mm film formed during:
   t= 2h:<10%
   t = 8h:< 5%
   t= 24h: < 5%
   Film is considered stable when weight loss is lower than 5%.

In an embodiment, the water-based waterproofing membrane consists of a water-based dispersion of polyester-polyurethane resin (the resin comprises a film-forming temperature of 0°C, elongation of 850%, tensile strength of 15MPa) in concentration between 40 and 70% w/w, fillers and talc, antifoam, biocides and fungicide, polyurethane rheological agent between 0.01 and 0.10% w/w, pigments between 3 and 10% w/w of the final product, pH regulator and coalescing agent. The water-based waterproofing membrane complies with basic requirements identified in EAD 03035000 0402. The test procedures described in the EAD may depend on the type of membrane and its categories of use, i.e., depend on:
Expected life cycle;
Use climate zone;
Usage load;
roof inclination;
Minimum surface temperatures;
Maximum surface temperatures.

In one embodiment, the membrane also has optimized radiation reflectance properties through the incorporation of specific additives, preferably radiation reflection enhancer additives, capable of reflecting solar rays in the infrared range, allowing the reduction of thermal absorption of roofing element and, consequently, the transfer of heat to the interior of buildings, to promote thermal comfort of those. When applied, the white membrane has a TSR (Total Solar Reflection) above 0.7 and the orange and gray membrane has a TSR above 0.3. The reflectance property also helps to reduce damage/cracks (less tensions), since it reduces the thermal absorption in the material in climatic situations of high temperatures and solar incidence. Any of the membranes must not exceed 70°C temperatures by the action of infrared (IR) rays.

In an embodiment, the membrane presents the essential characteristics to be approved in EAD 030350000402 tests (resistance to mechanical damage, resistance to fatigue, resistance to weathering, UV radiation and severe climate zones), to present a minimum life cycle of 25 years, categorized to civil construction.

**Table** 1 depicts the composition of an example of the water-based polymeric membrane of the present disclosure.

**Table 1: Composition of an example of the water-based polymeric membrane of the present disclosure**

| Component | % m/m |
|---|---|
| polyester-polyurethane resin | 62 |
| Coalescent agent: DPnB (Dipropylene glycol n-butyl ether) | 3 |
| water | 2 |
| radiation reflection enhancer: titanium dioxide (TiO₂) | 3-10 |
| polyurethane rheological agent, | 0.03 |
| talc | 7 |
| Biocide: MIT/BIT (Methylisothiazolinone/ Benzisothiazolinone) | 0.2 |
| Defoamer silicone based | 0.5 |
| limestone filler | 15.17 - 22.17 |
| pH regulator: Aminomethyl propanol (2-amino-2-methyl-1-propanol) | 0.1 |

In an embodiment, the water-based waterproofing membrane of the present disclosure presents the results depicted in Table 2, comparing with other solution known in the prior art.

**Table 2. Results obtained for an embodiment of the water-based waterproofing membrane of the present disclosure, comparing with other solution known in the prior art.**

| Property | Standard (when applicable) | Result of the membrane of the present disclosure | Other (prior art) |
|---|---|---|---|
| Drying time (22º + 55Hr) | Weight loss (%) | | |
| | 2h | 10% | > 10% |
| | 8h | 5% | > 10% |
| | 12h | 5% | > 10% |
| | 24h | 5% | 5 to 10% |
| | Tackiness | < 2h | 8 to 48h |
| Tensile stenght (Mpa) | ASTM D412:06 2006) | 8 | 2 to 10 |
| Tear strenght (N/mm) | ASTM D412-00 (2000) | 27 | 5 to 30 |
| Elongation at break (%) | ASTM D412-06 (2006) | 500 | 100 to 800 |
| Viscosity (mPa) at 22°C | Brokfiled RVT 2+^{∗} | 50000 to 100000 mPa.s | 25000 to 100000 |

In an embodiment, the waterproofing system comprising the water-based waterproofing membrane and the textile reinforcement structure presents the results depicted in Table 3, comparing with other waterproofing system known in the prior art.

**Table 3. Results obtained for an embodiment of the waterproofing system (comprising the water-based waterproofing membrane and the textile reinforcement structure system) of the present disclosure, comparing with other solution known in the prior art**

| Property | Standard (when applicable) | Result of the waterproofing system of the present disclosure with the membrane of the present disclosure | Other (prior art) Water-based waterproofing membrane of the prior art+ PES Non-woven fabric |
|---|---|---|---|
| Tear resistance (N) | EN ISO 13937-4:2000 | Lenght - 110N Width - 120 N | Lenght - 42N |
| | | | Width - 34 N |

In an embodiment, the present disclosure also relates to a waterproofing system with radiation-reflective properties, comprising a quick-drying, water-based waterproofing membrane, reinforced with a textile substrate, which can also comprise intelligent systems, based on the integration of different materials and technologies, being able to achieve the technical performance equivalent to the best solvent-based waterproofing membrane solutions, with the associated environmental and health advantages. In addition to the above, the membrane also can reflect solar radiation to reduce heat absorption in the material and improve technical performance, in addition to sensing and regulating moisture and temperature coupled to the textile reinforcement substrate, capable of accelerating the curing process and regulate the internal moisture and temperature through an active heating system.

**Table 4** describes the layers included in the embodiment of the waterproofing system depicted in **Figure 1****,** comprising a plurality of layers.

**Table 4. Explanatory table of the layers included in the embodiment of the waterproofing system of the present disclosure depicted in Figure 1.**

| **No of layer** | **Description** | **Thickness** | **Application** |
|---|---|---|---|
| **1** | Insulation board | 60mm (or 40mm) | Board with 1m x 0.5m |
| **2** | Base layer cementitious mortar (webertherm pro) | ^{~} 3mm | First layer application |
| **3** | Reinforcement mesh ^{∗} (160g/m²) (webertherm normal mesh) | | On the still fresh material, stretch the fiberglass mesh and gently smooth the surface, incorporating the mesh superficially into the mortar. |
| **4** | Base layer cementitious mortar (webertherm pro) | ^{~} 3mm | The thickness of the mortar layer applied on the fiberglass mesh must guarantee its effective coverage. The finishing surface of the coating mortar must be flat. |
| **5** | Waterproofing membrane layer (2Kg/ m²) | ^{~} 0.75 - 1mm | Wait seven days for the waterproofing coating to be applied. Initial application between 0.50-1 kg ensuring that it is not excessive for application of the reinforcement. |
| **6** | Textile reinforcement structure (integrated with moisture and temperature detection and regulation systems) | < 2mm | Application of the textile reinforcement structure. |
| **7** | Waterproofing membrane layer (2 Kg/ m²) | ^{~} 0.75 - 1mm | Apply the remaining 1 kg after 4 to 12 hours (ensure that the previous material still has sticky power/tack). If the remaining 1 kg proves to be excessive, apply 2 times, with an interval of 4 to 8 hours. |

In another embodiment, the present disclosure relates to a waterproofing system, comprising a textile reinforcement structure, which may also comprise systems for sensing moisture and temperature and coupled active heating, based on the study of yarn types and technical sketching design, in accordance with the needs and technical requirements previously defined.

In an embodiment, the main details to be retained in the textile reinforcement structure are:
- Alkaline resistance compared to existing non-woven solutions, measured at the shear/Tear stress level;
- Geometry of the chosen textile structure, which is a balance between the need for mechanical reinforcement without impairing the drying process of the water-based waterproofing membrane that occurs by evaporation, which in the textile structure with smaller mesh impairs drying and does not allow a continuous combined system between mesh and membrane (results only distinct layers of both), and the textile structure with larger mesh will not result in good mechanical strength/system reinforcement.

In an embodiment of the present disclosure, the main details to be retained in the textile reinforcement structure are:
- Alkaline resistance compared to existing non-woven solutions, measured at shear/Tear stress level;
- The selected network-shaped pattern/geometry (checkerboard pattern) of the developed textile structure promotes a balance between the need for mechanical reinforcement without harming the drying process of the water-based waterproofing membrane that occurs by evaporation;
- The textile with a tight mesh draft pattern impairs drying and does not allow a continuous combined system between the network-shaped textile and the membrane (only resulting in distinct layers of both);
- The textile with a very open mesh draft pattern, will not result in good mechanical resistance/reinforcement to the system.

In an embodiment, the present disclosure refers to the development of a woven textile structure, based on previously defined technical specifications, regarding grammage, mechanical and chemical resistance to withstand resistance losses caused by alkaline conditions (pH 12-14) promoted by the membrane after application and throughout its life cycle, thickness and low hydrophilicity to enhance the drying process.

In an embodiment, to achieve these characteristics, continuous filament yarns were used in the warp and weft direction of the fabric, of recycled polyester composition, with a linear mass of 167×2 dtex and a twist of 300 turns/meter.

In an embodiment, in terms of texture, the sketching and density of the warp and weft yarns were defined, in order to develop a textile structure with a net-shaped pattern (checkered shape) with small size (0.5-2mm), a crucial feature to allow the optimal transfer of the membrane through the structure, promote the adhesion of the waterproofing membrane and meet the requirements of low grammage (145-165 g/m²) (or 90-200g/m²) and thickness (0.8-1.4mm), high-strength bidirectional tearing (400N).

In an embodiment, the technical sketching of this structure was thought and developed so that the conductive and active heating wires (materials), as well as the technologies applied for sensing and detecting moisture and temperature, were integrated into its weaving construction. Thus, for this structure to present the capacity of sensing and active heating, conductive wires of copper composition with technical specifications were used, to comply with the parameters of mechanical and chemical resistance (electrical conduction of these wires, after exposure in a highly alkaline environment (pH 12-14), specified grammage and thickness for the wires used in the reinforcement structure, and allow easy insertion in the developed structure. The ideal positioning of the conductive wires that make up the heating system was also evaluated. Specific spacings between these wires have been defined, so that the heating systems can achieve the desired performance.

In an embodiment, the spacing between the conductive wires in the textile reinforcement structure ranges from 0.5 to 3 cm.

In an embodiment, with the detection of moisture in a certain zone, a heating zone is activated that contains conductive wires that will be activated as a form of active heating and regulation of the temperature and moisture present, both in the curing process and throughout its life cycle. In addition, it is possible to identify the specific region where the moisture is detected - in case the moisture occurs through existing cracks - to enable the membrane to be kept punctually (specific area).

In an embodiment, the textile reinforcement structure with smart features is easy to handle and apply at the construction site (work) from the point of view of users/professionals in the area (specialists), so that the structure is organized in the form of a roller/blanket.

In an embodiment, an advanced and innovative thermal reflective waterproofing system was developed, applicable in the contemporary context of new constructions and rehabilitation of existing buildings, so that it is possible to respond in a positive way to the detectable problems in the standard waterproofing systems usually applied, and that it fulfils all the necessary requirements to be in accordance with the established norms, through EAD 030350 00 0402 and the predefined economic aspects (final cost for selling the solution).

In an embodiment, so that the waterproofing membrane reinforced with an intelligent textile structure can be applied in different contexts, namely in conventional and inverted roofs, a base layer was studied in terms of mechanical compatibility and adhesion (contact between the surfaces) between the membrane and the insulation materials present in conventional roofs.

In an embodiment, this base layer is composed of a cementitious mortar and a textile structure, to be applied in situations where the application of the waterproofing system does not occur on a standard base (concrete), but on possible insulation bases/materials, such as XPS and MW (mineral wool), conferring basic rigidity to facilitate the application of the waterproofing system, as well as to avoid membrane permeability in the porosity of thermal/acoustic insulation materials.

In an embodiment, the performance of the waterproofing membrane will greatly depend on its compatibility with the suitable textile reinforcement substrate, since the currently available textile structures are suitable for the application of solvent-based waterproofing membranes, being non-woven and networked structures of low mechanical and chemical strength (large size mesh checked patterns).

In an embodiment, as the waterproofing membrane is a water-based waterproofing membrane, the textile reinforcement substrate is fully differentiated from the solutions described in the prior art, as it has the simultaneous ability to promote high mechanical resistance, without compromising the drying process, due to its low hydrophilic properties, as well as the optimal thickness for membrane binding and transfer. Additionally, it has chemical stability suitable for final application in highly alkaline membrane media. The reinforcement structure has good malleability and reduced weight per square meter, allowing an easy application on site.

In an embodiment, the textile reinforcement structure comprises textile moisture and temperature detection and regulation systems, integrated into the weaving process. The introduction of textile sensors and heating systems by weaving simplifies the production process of the reinforcement structure and, in addition, it allows monitoring of system moisture and temperature to act in the regulation of these variables contributing to the active curing process of the system. There are no solutions available for textile temperature and moisture sensors and heating systems integrated by weaving in the textile reinforcement structure applied to waterproofing systems.

In an embodiment, the textile structure comprises screen printed sensors. The integration of functional temperature and moisture screen printed sensors directly by lamination into the textile reinforcement structure makes it possible to monitor system moisture and temperature. Printed sensors can be seen as an alternative to textile sensors.

In an embodiment, the integration of a heating system in the textile reinforcement structure allows the regulation of its temperature and moisture, contributing to an active curing process of the water-based waterproofing membrane.

In an embodiment, the integration of moisture detection sensors with the heating system allows the detection of cracking and consequent interior structure moisture regulation through the heating system activation, contributing to the system increase durability.

In an embodiment, the incorporation of radiation reflection enhancer additives on waterproofing membranes of different colours that present TSR values higher than market current solutions, allows to guarantee smaller thermal amplitudes in the materials when exposed to radiation, reducing the likelihood of cracking problems and, consequently, increasing system durability, as well as increasing the thermal comfort inside buildings.

In an embodiment, the use of the textile reinforcement structure of the present disclosure has the following advantages: shorter curing time, allowing the system to be applied and finalized in just one day, even in colder climates; greater resistance to cracking; thermal comfort within the building promoted by IV reflectance; bidirectional mechanical resistance; maintenance and extended service life through damp setting and dampness regulation; associated environmental and health advantages (water-based); fast water-based drying, compared to the market.

**Table 5** presents the properties, evaluation methodologies (associated standard), target values and results for the base layer mortar, waterproofing membrane and textile reinforcement structure of the waterproofing system developed and coupled system, according to the identified needs, of a preferred embodiment.

**Table 5. Properties, evaluation methodologies (associated standard), target values and results for the base layer mortar, waterproofing membrane and textile reinforcement structure of the waterproofing system developed and coupled system of the present disclosure.**

| | **Property** | **Associated standard^{∗}** | **Target values** | **Results of the solution of the present disclosure** |
|---|---|---|---|---|
| Base layer mortar | Adhesion to insulation (MPa) | EAD 040083-00-0404 | >0.08 (or cohesive rupture) | 0.07 (for mineral wool); 0.20 (XPS boards) |
| | Adhesion to concrete (MPa) | EAD 040083-00-0404:2020 | >1 | 1.5 |
| | Dynamic modulus of elasticity (MPa) | EN 14146:2004 | <8000 | 7500 |
| | Retraction (mm/m) | EN 998-1:2016 | <2.5 | 1.25 |
| | Compressive strength (MPa) | EN 998-1:2016 | >5 | 8 |
| | Flexural Strength (MPa) | EN 998-1:2016 | >2.5 | 3.5 |
| Waterproofing membrane | Drying time (h) | Room temperature 22°C | <2 | 2h: no tack 8h: < 10% weight loss |
| | Tensile Strength (MPa) | ISO 3376:2020 | >1 | 8 (ASTM D412-06:2006) |
| | Stretching (%) | ISO 527-3:2020 | >250 | 500 (ASTM D412-06:2006) |
| | Shear resistance/Tear (MPa) | ASTM D624:2020, type C | >1 | 25N/mm (ASTM D412-00:2000) |
| | Adhesion to concrete (MPa) | N/A | >1 | 1.5 |
| | Resistance to alkaline pH (lime water), adhesion | N/A | >1 | 1.2 |
| | Watertightness | EAD 030350 00 0402 | Aproved | Aproved |
| | White TSR | ASTM E903:2020 | >0.7 | 0.86 |
| | Gray and Orange TSR | | >0.3 | 0.36 |

| | | | | |
|---|---|---|---|---|
| ^{∗}The refer properties may be measured by different methos, in the present invention the different properties were calculated using the referred methods. | | | | |

**Figure 2** refers to an example of a waterproofing system comprising the textile reinforcement structure with integration of heating wires and sensor wires, with application of the water-based waterproofing membrane. In this example, the textile reinforcement structure used is a woven textile fabric structure composed by continuous recycled polyester fibers with a mesh draft pattern of 1,5 mm, a grammage of 155 g/m², a thickness of 0.8 mm, a linear mass of 167/2 dtex. It comprises a warp of 19 yarns/cm and a weft of 23yarns/cm. The filament yarns comprise a twist of 300 turns/meter. The heating wires and the sensor wires are integrated through weaving with a spacing between them ranging from 0.5 to 3 cm for heating wires, and ranging from 0.5 to 50 cm for sensor wires. To obtain such waterproofing system, a first layer of the water-based waterproofing membrane is applied in the textile reinforcement structure, in the proportion of 2kg of waterproofing membrane per m² of the textile reinforcement structure, leading to a thickness of 0.8 to 1 mm. Then, a second layer of the water-based waterproofing membrane is applied leading to a final thickness ranging from 1.6 to 2mm.

**Figure 3** refers to a schematic representation of an embodiment of the waterproofing system that comprises a textile reinforcement structure with the integration of heating wires and moisture and temperature textile sensors and the water-based waterproofing membrane of the present disclosure. In this embodiment, the textile reinforcement structure used has a woven fabric structure and the textile material used is the one described in **Figure 2****.** The heating wires and the sensor wires are integrated through weaving with a spacing between them of 0.5 to 3 cm (for heating wires), and 0.5 to 50 cm (for sensor wires). To obtain such waterproofing system, a first layer of the water-based waterproofing membrane is applied in the textile reinforcement structure, in proportion of 2kg of waterproofing membrane per m² of the textile reinforcement structure, leading to a thickness of 0.8 to 1 mm. Then, a second layer of the water-based waterproofing membrane is applied until a final thickness between 1.6 and 2mm.

**Figure 4** refers to a schematic representation of an embodiment of the waterproofing system comprising a textile reinforcement structure with the integration of heating wires and moisture and temperature screen printed sensors. In this embodiment, the textile reinforcement structure used has a woven fabric structure and the textile material is the one described in **Figure 2****.** The heating wires are integrated through weaving with a spacing between them of 0.5 to 3 cm. The moisture and temperature screen printed sensors were directly integrated in the textile structure by lamination with a spacing between them of 0.5 to 50 cm. To obtain such waterproofing system, a first layer of the water-based waterproofing membrane is applied in the textile reinforcement structure, in proportion of 2kg of waterproofing membrane per m² of the textile reinforcement structure, leading to a thickness ranging from 0.8 to 1 mm. Then, a second layer of the water-based waterproofing membrane is applied until a final thickness ranging from 1.6 to 2 mm.

In an embodiment, the various components may contain additive enhancers to decrease the surface temperature of the structure.

In an embodiment, the various components may contain radiation reflection enhancer additives.

In an embodiment, the radiation reflection enhancer additives are incorporated into the waterproofing membrane.

In an embodiment, the radiation reflection enhancer additives are incorporated into the waterproofing membrane using a pre-dispersion of the additive.

In an embodiment, water is the solvent used in the additive pre-dispersion.

In an embodiment, the radiation reflection enhancer additive is TAYCA's JR-1000 pigment, comprising pigment grade titanium dioxide.

In an embodiment, JR-1000 pigment concentration ranges between 0.5 - 50 % by mass.

In an embodiment, the radiation reflection enhancer additive is pigment Black 30C941 from The Sheperd Color Company, comprising chromium iron oxide.

In an embodiment, the radiation reflection enhancer additive is the pigment Black 10P992, comprising chromium green-black hematite.

In an embodiment, pigment concentration Black 10P992 range from 0.1 - 20 % mass; more preferably 0.5 - 7% mass.

In an embodiment, the textile structure comprises basalt composition/PES fabric, presenting the characteristics of heavy structure, low membrane transfer, longer curing time, lower application uniformity.

The term "comprises" or "comprising" when used in this document is intended to indicate the presence of the characteristics, elements, integers, steps and components mentioned, but does not prevent the presence or addition of one or more other characteristics, elements, integers, steps and components, or groups thereof.

The present disclosure is, of course, in no way restricted to the achievements described in this document and a person with average knowledge of the area may foresee many possibilities of modification of it and substitutions of technical characteristics by other equivalent, depending on the requirements of each situation as defined in the attached claims.

Where ranges are provided, the range limits are included. Furthermore, it should be understood that unless otherwise indicated or otherwise evident from the context and/or understanding of a technical expert, the values which are expressed as ranges may assume any specific value within the ranges indicated in different achievements of the invention, at one tenth of the lower limit of the interval, unless the context clearly indicates the contrary. It should also be understood that, unless otherwise indicated or otherwise evident from the context and/or understanding of a technical expert, values expressed as range may assume any sub-range within the given range, where the limits of the sub-range are expressed with the same degree of precision as the tenth of the unit of the lower limit of the range.

The following claims define additional achievements of this description.

## Claims

1. A textile reinforcement structure for waterproofing systems comprising
a woven fabric structure;
a mesh draft pattern ranging from 0.1 to 3 mm;
and a bidirectional tear resistance ranging from 200-500 N, measured through standard EN ISO 13937-4:2000.

2. The textile reinforcement structure for waterproofing systems according to the previous claim wherein the mesh draft pattern ranges from 0.1-2.5 mm; more preferably from 1.0 to 2.0 mm.

3. The textile reinforcement structure for waterproofing systems according to any of the previous claims wherein the bidirectional tear resistance ranges from 250-450 N; more preferably from 300-400 N, measured through standard EN ISO 13937-4:2000.

4. The textile reinforcement structure for waterproofing systems according to any of the previous claims comprising a textile reinforcement structure grammage ranging from 60 to 300 g/m²; preferably from 90 to 200 g/m²; more preferably from 147 to 163 g/m².

5. The textile reinforcement structure for waterproofing systems according to any of the previous claims comprising a textile reinforcement structure thickness ranging from 0.3 to 1.8 mm; preferably from 0.8 to 1.3 mm.

6. The textile reinforcement structure for waterproofing systems according to any of the previous claims wherein the textile material is selected from the list consisting of: polyester, polypropylene, basalt, aramid, hemp and sisal, or combinations thereof; preferably polyester.

7. The textile reinforcement structure for waterproofing systems according to any of the previous claims wherein the filament yarns of the textile reinforcement structure comprise a linear mass ranging from 167x2 to 167x4 dtex.

8. The textile reinforcement structure for waterproofing systems according to any of the previous claims wherein the filament yarns of the textile reinforcement structure comprise a twist ranging from 200-700 turns/meter, preferably 200-400 turns/meter, preferably used in the direction of the warp.

9. The textile reinforcement structure for waterproofing systems according to any of the previous claims comprising a warp comprising 14-30 yarns/cm, and a weft comprising 14-30 yarns/cm; preferably, a warp comprising 18-23 yarns/cm and a weft comprising 18-23 yarns/cm.

10. The textile reinforcement structure for waterproofing systems according to any of the previous claims comprising moisture sensor; temperature sensor; or combinations thereof.

11. The textile reinforcement structure for waterproofing systems according to any of the previous claims comprising control and/or regulation means; in particular means for control heating, preferably wherein the means for control heating comprises conductive wires, preferably wherein the conductive wires are integrated by weaving in the textile reinforcement structure.

12. The textile reinforcement structure for waterproofing systems according to any of the previous claims 12-17 wherein the sensors are textile sensors; preferably integrated by weaving into the textile reinforcement structure, or screen printed sensors; preferably integrated directly by lamination into the textile reinforcement structure, or mixtures thereof.

13. A water-based waterproofing membrane comprising
a water-based dispersion of polyester-polyurethane resin, in a concentration ranging from 40-70% w/w;
one or more radiation reflection enhancer additive in a concentration ranging from 3-10% w/w;
a polyurethane rheological agent in a concentration ranging from 0.01 to 0.10% w/w,
an alkaline pH regulator between 0.01 and 0.1% w/w, usually amine based, to stabilize the dispersion,
wherein the membrane forms a film at a temperature above 5°C inclusive, elongation at break of 500%, tensile strength of 8 MPa, tear strength of 27N/mm and a viscosity ranging from 50000 to 100000 mPa.s at 22 °C.

14. A waterproofing system comprising a textile reinforcement structure according to any of the previous claims 1-19 and two or more layers of a waterproofing membrane; preferably two layers.

15. The waterproofing system according to the previous claim comprising an insulation board, a first base layer cementitious mortar, a reinforcement mesh, a second base layer cementitious mortar, a first waterproofing membrane layer, said textile reinforcement structure and a second waterproofing membrane layer.
